# EUROPEAN PATENT APPLICATION

(11) **EP 4 032 996 A1**
(43) Date of publication of application: **27.07.2022**
(21) Application number: 20866466.4
(22) Date of filing: 17.09.2020
(51) Int. Cl.: C21D 8/12, C21D 9/46, C22C 38/00, C22C 38/06, C22C 38/60, H01F 1/147

(54) **METHOD FOR MANUFACTURING GRAIN-ORIENTED ELECTRICAL STEEL SHEET**

(30) Priority: 18.09.2019 JP 2019169417
(71) Applicant: NIPPON STEEL CORPORATION, Chiyoda-ku Tokyo 100-8071 (JP)
(72) Inventor: YASUDA, Masato, Tokyo 100-8071 (JP); ARITA, Yoshihiro, Tokyo 100-8071 (JP); KATAOKA, Takashi, Tokyo 100-8071 (JP); MURAKAMI, Kenichi, Tokyo 100-8071 (JP); ARAMAKI, Takeo, Tokyo 100-8071 (JP); YANO, Shinya, Tokyo 100-8071 (JP)
(74) Representative: Vossius & Partner Patentanwälte Rechtsanwälte mbB
(86) International application number: PCT/JP2020/035336
(87) International publication number: WO 2021/054408

(57) **Abstract**

(Problem) The purpose of the present invention is to provide a method for manufacturing a grain-oriented electrical steel sheet, whereby it becomes possible to manufacture a grain-oriented electrical steel sheet having further improved iron loss properties stably. (Solution) According to one aspect of the present invention, a method for manufacturing a grain-oriented electrical steel sheet is provided, the method being characterized by comprising a re-heating step, a hot rolling step, a hot-rolled sheet annealing step, a cold rolling step, a decarburization annealing step and a final annealing step, wherein the decarburization annealing step includes a heating step of heating a cold-rolled sheet from an inlet side temperature T0°C to a soaking temperature T2°C and a soaking step of keeping the temperature of the cold-rolled sheet at the soaking temperature T2°C, and the heating rate HR1 from the time point when the temperature of the cold-rolled sheet is an inlet side temperature T0°C to the time point when the temperature of the cold-rolled sheet reaches a attained temperature T1°C is 40°C/sec or more and the heating rate HR2 from the time point when the temperature of the cold-rolled sheet is the desired temperature T1°C to the time point when the temperature of the cold-rolled sheet reaches the soaking temperature T2°C is more than 15°C/sec to 30°C/sec in the heating step in the decarburization annealing step.

## Description

### TECHNICAL FIELD

The present invention relates to a method for manufacturing a grain-oriented electrical steel sheet.

### BACKGROUND ART

In the grain-oriented electrical steel sheet, crystal grains accumulated in the {110} <001> orientation (such crystal grains are also called Goss oriented grains) are highly aligned, and the steel sheet comprises Si in an amount of approximately 7% or less in mass%. Control of crystal orientation in the production of such grain-oriented electrical steel sheets is achieved by utilizing a catastrophic grain growth phenomenon called secondary recrystallization.

One method for controlling this secondary recrystallization is industrially carried out wherein the method is to completely dissolve an inhibitor during heating of the steel slab before hot rolling, and then finely deposit it in the hot rolling and subsequent hot band annealing steps. In this method, the steel slab needs to be heated at 1350 to 1400 °C in order to completely dissolve the inhibitor during heating of the steel slab before hot rolling. However, since this heating temperature is about 200 °C higher than the heating temperature for manufacturing an ordinary steel, there is a problem that a heating furnace dedicated to manufacturing grain-oriented electrical steel sheets is required. Further, since it is necessary to heat the steel slab to a very high temperature, there is a problem that the resulting amount of molten scale increases, for example.

Therefore, research and development is underway on a technology for heating steel slabs at low temperatures before hot rolling. As such a technique, for example, Patent Document 1 discloses a method of using (Al, Si) N formed by nitriding treatment, as an inhibitor. Further, Patent Document 2 discloses, as a specific nitriding treatment method, a method of making a steel sheet after decarburization annealing in a strip form and nitriding it. Non-Patent Document 1 discloses the behavior of a nitride when a steel sheet is nitrided in a strip form.

Here, in the technique of heating the steel slab at a low temperature before hot rolling, the adjustment of the primary recrystallized grain texture during decarburization annealing is important for controlling the secondary recrystallization. However, in this technique, the inhibitor may not be sufficiently formed during decarburization annealing. In this case, according to Patent Document 3, the coefficient of variation of the particle size distribution of the primary recrystallized grain texture is larger than 0.6. Therefore, the primary recrystallized grain texture becomes non-uniform. As a result, there is a problem that the secondary recrystallized grain structure becomes non-uniform and unstable.

Therefore, research on the primary recrystallized grain texture, which is a control factor for secondary recrystallization, is being enthusiastically pursued. In such studies, it was found that the {411} oriented grains in the primary recrystallized grain texture influence the preferential growth of {110} <001> secondary recrystallized grains. For example, in Patent Document 4, techniques for enhancing inhibitors are disclosed, wherein the ratio of I {111} / I {411} of the primary recrystallized grain texture after decarburization annealing is adjusted to 3.0 or less, and then the steel sheet is subjected to nitriding treatment. Patent Document 4 discloses that a grain-oriented electrical steel sheet having a high magnetic flux density can be industrially and stably manufactured by enhancing an inhibitor. Here, I {111} and I {411} are the abundance ratios of grains whose {111} and {411} planes are parallel to the sheet surface, respectively, and represent diffraction intensity values which are measured by X-ray diffraction measurement at a sheet thickness of 1/10 layer.

After that, while research on the primary recrystallized grain texture was advanced, it was found that controlling the heating temperature during decarburization annealing was an effective method for controlling the grain structure after the primary recrystallization. For example, in the technique disclosed in Patent Document 5, in the heating step (temperature rising process) for the decarburization annealing step, the steel sheet temperature reaches the attained temperature within the range of 750 to 900 °C from the inlet side temperature of 600 °C or lower by rapidly heating the steel sheet at a heating rate of 40 °C/sec or higher. As a result, the ratio of I {111} / I {411} is controlled to 3 or less in the primary recrystallized grain texture after decarburization annealing. Further, the amount of oxygen in the oxide layer of the steel sheet is adjusted to 2.3 g/ m² or less by subsequent annealing. Patent Document 5 discloses that the secondary recrystallization is stabilized by the above technique.

Further, Patent Document 6 discloses a technique for setting the heating rate to 50 °C/sec or more in a temperature range where the temperature of the steel sheet is 200 °C to 700 °C. Further, in the technique disclosed in Patent Document 6, the retention treatment at any temperature of 250 °C or higher and lower than 500 °C with a treatment time of 0.5 to 10 seconds is performed 1 to 4 times, and the retention treatment at any temperature of 500 °C or higher and 700 °C or lower with a treatment time of 0.5 to 3 seconds is performed once or twice. Patent Document 6 discloses that a grain-oriented electrical steel sheet having a small variation in iron loss can be manufactured by such a treatment.

Here, as a device for rapidly heating the steel sheet in the heating step during decarburization annealing, a device using a radiant heat source such as a radiant tube, a device using a high energy heat source such as a laser, an induction heating device, an energizing heating device and the like are exemplified in Patent Document 5. Of these, the induction heating device is particularly advantageous in that it has a high flexibility in heating rate, can heat the steel sheet in a non-contact manner, and is relatively easy to install in a decarburization annealing furnace. Patent Document 7 discloses a technique for heating during decarburization annealing using an induction heating device.

However, when decarburization annealing is subject to a steel sheet with a relatively thin sheet thickness using an induction heating device, the current penetration depth of the eddy current becomes deep when the temperature of the steel sheet is near the Curie point because the sheet thickness of the steel sheet is thin. For this reason, the front and back offsets of the eddy current that goes around the surface layer portion of the cross section in the sheet width direction occur, and the eddy current does not flow. Therefore, it becomes difficult to heat the steel sheet to a temperature equal to or higher than the Curie point. Here, the Curie point of the steel sheet is about 750 °C. Therefore, rapid heating using an induction heating device can only be performed up to 750 °C. Therefore, when it is desired to heat the steel sheet to a higher temperature, it is not possible to use an induction heating device, and it is necessary to use another heating device in combination.

However, when other heating devices are used in combination, various problems occur. For example, since an energization heating device or the like comes into contact with the steel sheet, the equipment advantage of the induction heating device is lost in addition to occurring problems such as scratches on the steel sheet.

Therefore, in the technique disclosed in Patent Document 7, the lamella spacing is controlled to 20 µm or more in the grain structure after the hot-rolled sheet annealing step by controlling the annealing conditions in the hot-rolled sheet annealing step. Patent Document 7 discloses that such a technique can reduce the rapid heating temperature range (temperature range from the inlet side temperature to the attained temperature) in the heating process during decarburization annealing to a temperature at which an induction heating device can be used. Specifically, in Patent Document 7, in the heating process during decarburization annealing, a heating rate in which the steel sheet is heated from the inlet side temperature to the attained temperature of 550 to 720 °C is set to 40 °C/sec or more, and then the heating rate up to a soaking temperature range is set to 10 to 15 °C/sec.

### CITATION LIST

### PATENT LITERATURE

Patent Literature 1: Japanese Examined Patent Publication (Kokoku) No. 62-45285
Patent Literature2: Japanese Unexamined Patent Publication (Kokai) No. 2-77525
Patent Literature3: Japanese Examined Patent Publication (Kokoku) No. 8-32929
Patent Literature4: Japanese Unexamined Patent Publication (Kokai) No. 9-256051
Patent Literature5: Japanese Unexamined Patent Publication (Kokai) No. 2002-60842
Patent Literature6: Japanese Unexamined Patent Publication (Kokai) No. 2015-193921
Patent Literature7: Japanese Unexamined Patent Publication (Kokai) No. 2008-1983

### NON-PATENT LITERATURE

Non-Patent Literature1: "Materials Science Forum" 204-206 (1996), pp593-598

### SUMMARY OF INVENTION

### TECHNICAL PROBLEM

However, the technique disclosed in Patent Document 7 still remains a problem of not being able to fully enjoy an effect of improving magnetic characteristics, as compared with the technique of rapidly heating up to about 750 to 900 °C by a device regardless of the heating method as shown in Patent Documents 5 and 6. More specifically, according to the technique disclosed in Patent Document 7, the magnetic flux density is improved, but the crystal grain size of the steel sheet after the secondary recrystallization (hereinafter, also referred to as "secondary recrystallized grain size") is increased. Therefore, there is a problem that an improvement margin for iron loss is small.

On the other hand, the techniques disclosed in Patent Documents 1 to 3 have a problem that the primary recrystallized grain texture becomes non-uniform and unstable as described above. Therefore, the iron loss characteristics were not sufficient. According to the techniques disclosed in Patent Documents 4 to 6, improvement in iron loss characteristics can be expected, but further improvement in iron loss characteristics is required for grain-oriented electrical steel sheets.

The iron loss of the grain-oriented electrical steel sheet can be improved by applying magnetic domain control such as laser thermal strain, mechanical groove addition, and etching groove addition to the grain-oriented electrical steel sheet. However, in order to realize higher iron loss characteristics, it is required to further improve the iron loss before magnetic domain control.

The present invention has been made in view of the above circumstances, and an object of the present invention is to provide a method for manufacturing a grain-oriented electrical steel sheet capable of stably manufacturing a grain-oriented electrical steel sheet having further improved iron loss characteristics.

### SOLUTION TO PROBLEM

The present inventors have made extensive studies to solve the above problems. As a result, the present inventors have found that when the steel sheet is rapidly heated by using an induction heating device in the heating process of decarburization annealing, and when the heating rate from the attained temperature to the soaking temperature is slow, the secondary recrystallized grain size is increased and the iron loss is worsened. Further, the present inventors have found that by controlling the heating rate in the rapid heating temperature range (the temperature range from the inlet side temperature to the attained temperature) and the heating rate from the attained temperature to the soaking temperature under appropriate conditions, the secondary recrystallized grain-size can be reduced to stably produce a grain-oriented electrical steel sheet having excellent iron loss characteristics. That is, the gist of the present invention is as follows.

According to a certain viewpoint of the present invention, a method for manufacturing a grain-oriented electrical steel sheet, characterized in that the method comprises
a reheating step in which a steel slab comprising, as chemical components, by mass%, Si: 2.00 to 4.00%, C: 0.085% or less, Al: 0.01 to 0.065%, N: 0.004 to 0.012%, Mn: 0.05 to 1.00%, S: 0.003 to 0.015% and consisting of the balance Fe and impurities is heated at a temperature of 1280 °C or lower, a hot rolling step of hot rolling the heated steel slab, a hot-rolled sheet annealing step of annealing the hot rolled sheet obtained by the hot rolling step, a cold rolling step of cold rolling the hot rolled sheet after the hot-rolled sheet annealing step, a decarburization annealing step of decarburization annealing the cold rolled sheet obtained by the cold rolling step, and a final annealing step of final annealing the cold rolled sheet after performing the decarburization annealing step, wherein the decarburization annealing step comprises a heating step to heat the cold rolled sheet from an inlet side temperature T0 °C of 600 °C or lower to a soaking temperature T2 °C of a temperature higher than the inlet side temperature T0 °C, and a soaking step to maintain the temperature of the cold rolled sheet at the soaking temperature T2 °C, wherein at the heating step in the decarburization annealing step, a heating rate HR1 at which rate the cold rolled sheet is heated from the inlet side temperature T0° C to an attained temperature T1 °C which is in the range from 700°C to 900°C, and lower than the soaking temperature T2 °C is set to 40 °C/sec or more, and a heating rate HR2 at which rate the temperature of the cold rolled sheet changes from the attained temperature T1 °C to the soaking temperature T2 °C is set to higher than 15°C/sec and up to 30°C/sec.

Here, the heating rate HR1 may be 75 to 125 °C/sec.

Further, as a chemical component, the steel slab may further comprise one or more of B: 0.0100% or less, Cr: 0.30% or less, Cu: 0.40% or less, P: 0.50% or less, Sn: 0.30% or less, Sb: 0.30% or less, Ni: 1.00% or less, Mo: 0.1% or less, and Bi: 0.01% or less, based on mass%.

### ADVANTAGEOUS EFFECTS OF INVENTION

According to the above viewpoint of the present invention, the heating rate in the rapid heating temperature range in the heating (temperature rising) step of decarburization annealing is controlled, and the heating rate from the attained temperature to the soaking temperature is controlled under appropriate conditions. As a result, the grain size of the secondary recrystallization can be reduced, and a grain-oriented electrical steel sheet having further improved iron loss characteristics can be stably produced. Further, it is possible to manufacture a grain-oriented electrical steel sheet whose magnetic properties and the like are further improved according to the additional elements.

### BRIEF DESCRIPTION OF DRAWINGS

FIG. 1 is a graph illustrating a temperature rise pattern in decarburization annealing of the present embodiment.
FIG.2 is a graph showing the correlation between the secondary recrystallized grain size and iron loss.
FIG. 3 is a diagram schematically showing how an aggregate structure (texture) is formed.

### DESCRIPTION OF EMBODIMENTS

### <1. Examination by the present inventors>

First, the present inventors investigated the reason why the technique disclosed in Patent Document 7 cannot sufficiently obtain the iron loss improving effect of the grain-oriented electrical steel sheet. As a result, the present inventors have found that some grain-oriented electrical steel sheets manufactured by the technique disclosed in Patent Document 7 have a high magnetic flux density but an inferior iron loss. Therefore, when the present inventors investigated the characteristics of the inferior iron loss, it became clear that the secondary recrystallized grain size tends to be large. That is, as the magnetic flux density increases, the hysteresis loss is reduced. However, when the secondary recrystallized grain size is increased, the eddy current loss increases. Therefore, in the technique disclosed in Patent Document 7, it has been found that the reduction in hysteresis loss is offset by the increase in eddy current loss, and further, the iron loss is worsened.

As a result of investigating a method for solving this problem, the present inventors have found that by appropriately controlling the heating rate from the inlet side temperature to the soaking temperature in decarburization annealing, the frequencies of {111} oriented grains, {411} oriented grains and Goss oriented grains in the primary recrystallized grain texture can be appropriately controlled. Furthermore, the present inventors have found that the secondary recrystallized grains size can be reduced by final annealing the steel sheet in which the primary recrystallized grain texture is controlled as described above. Hereinafter, the method for manufacturing the grain-oriented electrical steel sheet according to the present embodiment will be described in detail. Regarding each temperature during decarburization annealing, the inlet side temperature means a temperature of the steel sheet when it is introduced into the annealing furnace, the soaking temperature means a temperature when the steel sheet is maintained at a constant temperature, and the attained temperature means a temperature higher than the inlet side temperature and lower than the soaking temperature. The specific range of each temperature will be described later.

### <2. Manufacturing Method of Grain-Oriented Electrical Steel Sheet >

### (2-1. Outline of Manufacturing Method)

Next, a method for manufacturing a grain-oriented electrical steel sheet according to the present embodiment will be described. The method for manufacturing the grain-oriented electrical steel sheet according to the present embodiment includes a steel slab preparation step, a reheating step, a hot rolling step, a hot-rolled sheet annealing step, a cold rolling step, a decarburization annealing step, a nitriding treatment step, an annealing separating agent coating step, a final annealing step, a purification annealing step, and a cooling step. Hereinafter, each step will be described in detail.

### (2-2. Steel Slab Preparation Step)

In this step, a steel slab will be prepared. Specifically, steel is melted by, for example, a converter or an electric furnace. The molten steel thus obtained is optionally vacuum degassed, and then continuously cast or ingot-cast, followed by bloom rolled. This gives a steel slab. The thickness of the steel slab is not particularly limited, but is usually cast in the range of 150 to 350 mm, preferably 220 to 280 mm. However, the steel slab may be a so-called thin slab having a thickness range of 30 to 70 mm. When a thin slab is used, there is an advantage that it is not necessary to subject it to a rough processing to the intermediate thickness when manufacturing the hot rolled sheet.

### (2-2-1. Composition of Steel Slab)

The steel slab comprises, as chemical composition, Si: 2.00 to 4.00%, C: 0.085% or less, Al: 0.01 to 0.065%, N: 0.004 to 0.012%, Mn: 0.05 to 1.00%, S: 0.003 to 0.015% based on mass%, and consisting of the balance Fe and impurities. Hereinafter, % related to the component composition shall mean mass% with respect to the total mass of the steel slab.

### (Si: 2.00 to 4.00%)

Si is an element that increases the electrical resistance of steel sheets and improves iron loss characteristics. If the Si concentration is less than 2.00%, *γ* transformation of the iron structure occurs during the final annealing and the crystal orientation of the steel sheet is impaired. Therefore, the Si concentration is set to 2.00% or more. The Si concentration is preferably 2.50% or more, and more preferably 3.00% or more. On the other hand, if the Si concentration exceeds 4.00%, the workability of the grain-oriented electrical steel sheet deteriorates, and cracks occur during rolling. Therefore, the Si concentration is set to 4.00% or less. The Si concentration is preferably 3.50% or less.

### (C: 0.085% or less)

C is an element that is effective in controlling the primary recrystallized grain texture, but it adversely affects the magnetic properties. Therefore, it is an element that is removed by decarburization annealing before final annealing. If the C concentration exceeds 0.085%, the decarburization annealing time becomes long and the productivity decreases. Therefore, the C concentration is set to 0.085% or less. The C concentration is preferably 0.070% or less, and more preferably 0.050% or less. The lower limit of the C concentration includes 0%, but if the C concentration is reduced to less than 0.0001%, the manufacturing cost will be increased significantly. Therefore, 0.0001% is a practical lower limit on the practical steel sheet. In grain-oriented electrical steel sheets, the C concentration is usually reduced to about 0.001% or less by decarburization annealing.

### (Al: 0.010 to 0.065%)

Al is an element that binds to N to produce (Al, Si) N or AlN that functions as an inhibitor. If the Al concentration is less than 0.010%, the effect of adding Al is not sufficiently exhibited and the secondary recrystallization does not proceed sufficiently. Therefore, the Al concentration is set to 0.010% or more. The Al concentration is preferably 0.015% or more, and more preferably 0.020% or more. On the other hand, if the Al concentration exceeds 0.065%, the precipitation and dispersion of the inhibitor become non-uniform, the required secondary recrystallized grain texture cannot be obtained, and the magnetic flux density decreases. Therefore, the Al concentration is set to 0.065% or less. The Al concentration is preferably 0.050% or less, and more preferably 0.040% or less.

### (N: 0.004 to 0.012%)

N is an element that binds to Al to form AlN that functions as an inhibitor. However, N is also an element that forms blister (hole) in the steel sheet during cold rolling. If the mass% of N is less than 0.004%, the formation of AlN is insufficient. Therefore, the N concentration is set to 0.004% or more. It is preferably 0.006% or more, and more preferably 0.007% or more. If the N concentration exceeds 0.012%, many blisters may be formed in the steel sheet during cold rolling. Therefore, the N concentration is set to 0.012% or less.

### (Mn: 0.05 to 1.00%)

Mn is an element that prevents cracking during hot rolling and bond to S to form an Mn compound, that is, MnS that functions as an inhibitor. If the Mn concentration is less than 0.05%, the effect of adding Mn is not sufficiently exhibited. Therefore, the Mn concentration is set to 0.05% or more. The Mn concentration is preferably 0.07% or more, and more preferably 0.09% or more. On the other hand, if the Mn concentration exceeds 1.00%, the precipitation and dispersion of the Mn compound becomes non-uniform, the required secondary recrystallized grain texture cannot be obtained, and the magnetic flux density decreases. Therefore, the Mn concentration is set to 1.00% or less. The Mn concentration is preferably 0.80% or less, and more preferably 0.60% or less.

### (S: 0.003 to 0.015%)

S is an element that binds to Mn to form MnS that functions as an inhibitor. If the S concentration is less than 0.003%, the effect of adding S is not sufficiently exhibited. Therefore, the S concentration is set to 0.003% or more. The S concentration is preferably 0.005% or more, and more preferably 0.007% or more. On the other hand, if the S concentration exceeds 0.015%, the precipitation and dispersion of MnS become non-uniform, the required secondary recrystallized grain texture cannot be obtained, and the magnetic flux density decreases. Therefore, that the S concentration is set to 0.015%. The S concentration is preferably 0.013% or less, and more preferably 0.011% or less.

In the components of the steel slab, the remainder excluding the above elements are Fe and impurities. Impurities are basically unavoidable impurities, but when the steel slab contains optional additive elements described later, the impurities are composed of these optional additive elements in addition to the unavoidable impurities. The unavoidable impurity is an element that is unavoidably mixed in both or either of the steel raw material and the steelmaking process, and is an element that is allowed as long as it does not impair the characteristics of the grain-oriented electrical steel sheet according to the present embodiment.

Further, for the purpose of not inhibiting the magnetic properties of the steel slab and enhancing other properties, one or more of B: 0.0100% or less, B: 0.0100% or less, Cr: 0.30% or less, Cu: 0.40% or less, P: 0.50% or less, Sn: 0.30% or less, Sb: 0.30% or less, Ni: 1.00% or less, Mo: 0.1% or less, Bi : 0.01% or less may be added as an optional additive element. Since these elements are optional additives, the lower limit of the concentration may be 0%.

### (B: 0.0100% or less)

B is an element that binds to N in the base steel sheet and complex-precipitates with MnS to form BN that functions as an inhibitor. The lower limit of the B concentration is not particularly limited and may be 0% as described above. However, in order to fully exert the effect of adding B, the lower limit of the B concentration is preferably 0.0005%. The B concentration is preferably 0.001% or more, and more preferably 0.0015% or more. On the other hand, if the B concentration exceeds 0.0100%, the precipitation and dispersion of BN become non-uniform, the required secondary recrystallized grain texture cannot be obtained, and the magnetic flux density decreases. Therefore, the B concentration is preferably 0.0100% or less. The B concentration is preferably 0.0080% or less, more preferably 0.0060% or less, and more preferably 0.0040% or less.

### (Cr: 0.30% or less)

Cr is an element that improves the internal oxide layer formed during decarburization annealing and is effective in forming a glass film. Therefore, Cr may be added to the steel slab in the range of 0.30% or less. If the Cr concentration exceeds 0.30%, the decarburization property is significantly inhibited. Therefore, the upper limit of the Cr concentration is preferably 0.30%.

### (Cu: 0.40% or less)

Cu is an element effective in increasing the specific resistance of a grain-oriented electrical steel sheet and its reducing iron loss. If the C concentration exceeds 0.40%, the iron loss reduction effect is saturated and causes surface defects such as "copper scabby defect" during hot rolling. Therefore, the upper limit of the C concentration is preferably 0.40%.

### (P: 0.50% or less)

P is an element effective in increasing the specific resistance of a grain-oriented electrical steel sheet and reducing its iron loss. If the P concentration exceeds 0.50%, a problem will occur in rollability. Therefore, the upper limit of the P concentration is preferably 0.50%.

### (Sn: 0.30% or less, Sb: 0.30% or less)

Sn and Sb are well-known grain boundary segregation elements. Since the steel slab according to the present embodiment contains Al, Al may be oxidized by the moisture released from the annealing separator depending on the final annealing conditions, and the inhibitor strength may fluctuate at the coil position. As a result, the magnetic properties may fluctuate at the coil position. As one of the countermeasures, there is a method of preventing the oxidation of Al by adding these grain boundary segregation elements, and for that purpose, Sn and Sb may be added to the base steel sheet at a concentration of 0.30% or less, respectively. On the other hand, if the concentration of these elements exceeds 0.30%, Si is less likely to be oxidized during decarburization annealing, the formation of a glass film becomes insufficient, and the decarburization annealing is significantly impaired. Therefore, the upper limit of the concentration of these elements is preferably 0.30%.

### (Ni: 1.00% or less)

Ni is an element that is effective in increasing the specific resistance of a grain-oriented electrical steel sheet and reducing its iron loss. Ni is also an element that is effective in controlling the iron structure of the hot rolled sheet and improving its magnetic properties. However, if the Ni concentration exceeds 1.00%, secondary recrystallization becomes unstable. Therefore, the upper limit of the Ni concentration is preferably 1.00%.

### (Mo: 0.1% or less)

Mo is an element that is effective in improving the surface texture during hot rolling. However, if the Mo concentration exceeds 0.1%, the Mo addition effect is saturated. Therefore, the upper limit of the Mo concentration is preferably 0.1%.

### (Bi: 0.01% or less)

Bi has the effect of stabilizing precipitates such as sulfides and strengthening the function as an inhibitor. However, if the Bi concentration exceeds 0.01%, Bi adversely affects the formation of the glass film. Therefore, the upper limit of the Bi concentration is preferably 0.01%.

### (2-3. Reheating Step)

In this step, the steel slab is reheated. The reheating temperature of the steel slab is preferably 1280 °C or lower. If the reheating temperature exceeds 1280 °C, the amount of molten scale increases. Further, since MnS is completely dissolved in the steel slab and finely precipitated in the subsequent steps, it is necessary to set the decarburization annealing temperature to more than 900 °C in order to obtain the attained primary recrystallized grain size. Therefore, in this embodiment, it is preferable to reheat the steel slab at 1280 °C or lower. The lower limit of the reheating temperature is not particularly limited, but may be, for example, 1100 °C. In the present embodiment, the temperature of the steel slab or the steel sheet can be measured by, for example, a radiation thermometer.

### (2-4. Hot Rolling Step, Hot-rolled sheet Annealing Step)

In the hot rolling (hot-rolling) step, the steel slab after reheating is hot rolled. In the hot-rolled sheet annealing step, the iron structure is recrystallized by heating the hot rolled sheet obtained by the hot rolling step as described above to a first stage temperature of 1000 to 1150 °C. Then, the hot rolled sheet is annealed at a second stage temperature of 850 to 1100 °C and lower than the first stage temperature. This hot-rolled sheet annealing step is mainly performed for the purpose of homogenizing the non-uniform structure generated during hot-rolling.

That is, in order to homogenize the non-uniform iron structure (hysteresis) generated during hot rolling before the final cold rolling, it is preferable to perform annealing once or more in the present embodiment. The upper limit of the first stage temperature in this case has a great influence on the inhibitor. For example, if the first stage temperature exceeds 1150 °C, the inhibitor may be finely precipitated in the subsequent steps. Therefore, it is preferable that the upper limit of the first stage temperature is set to 1150 °C. On the other hand, if the first stage temperature is less than 1000 °C, recrystallization may be insufficient and the iron structure after hot rolling may not be uniform. Therefore, it is preferable that the lower limit of the first stage temperature is set to 1000 °C. The upper limit of the second stage temperature also has a great influence on the inhibitor. For example, if the second stage temperature exceeds 1100 °C, the inhibitor may be finely precipitated in the subsequent steps. Therefore, it is preferable that the upper limit of the second stage temperature is set to 1100 °C. If the second stage temperature is less than 850 °C, the γ phase may not be generated, and there is a possibility that the iron structure cannot be made uniform. Therefore, it is preferable that the lower limit of the second stage temperature is set to 850 °C. Further, it is preferable to control the second stage temperature to a value lower than the first stage temperature.

### (2-5. Cold Rolling Step)

After performing the hot-rolled sheet annealing step, the hot rolled sheet is subjected to one cold rolling or two or more cold rollings (cold rollings) with an intermediate annealing therebetween. As a result, the final cold rolled sheet is produced. Each cold rolling may be carried out at room temperature, or may be warm rolling in which the temperature of the steel sheet is raised to a temperature higher than room temperature, for example, about 200 °C.

### (2-6. Decarburization Annealing Step)

The decarburization annealing step includes a heating step of heating the steel sheet after the cold rolling step (cold rolled sheet) from an inlet side temperature T0 °C to a soaking temperature T2 °C higher than the inlet side temperature, and a soaking step of maintaining a temperature of the cold rolled sheet at the soaking temperature T2 °C for a predetermined time. The decarburization annealing step is performed in a moist atmosphere. Here, the inlet side temperature T0 °C is a temperature at which the cold rolled sheet is introduced into the annealing furnace, and it is generally 600 °C or lower. The soaking temperature is a temperature in the range of 700 to 900 °C.

The soaking step of the decarburization annealing is performed for the purpose of removing carbon in steel and controlling the primary recrystallized grain size to a desired grain size. The soaking step is preferably carried out at a soaking temperature of T2 °C in a temperature range of 700 °C to 900 °C for a period such that the primary recrystallized grain size is 15 µm or more. If the soaking temperature T2 °C is less than 700 °C, the desired primary recrystallized grain size cannot be achieved, and if the soaking temperature T2 °C exceeds 900 °C, the primary recrystallized grain exceeds the desired grain size.

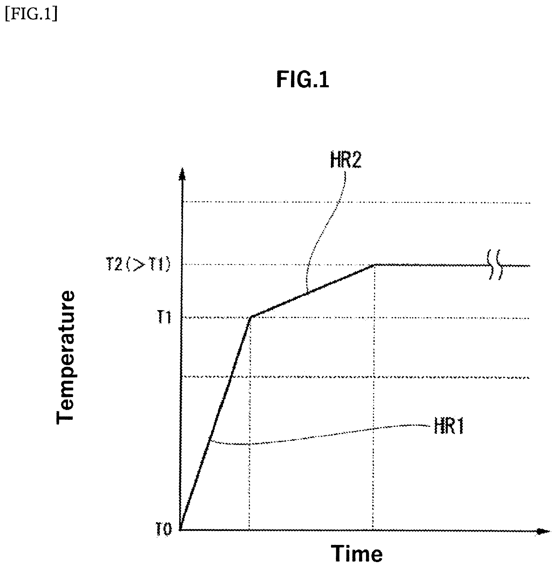

In the heating step, as shown in FIG. 1, the heating rate HR1 at which rate the cold rolled sheet is heated from the inlet side temperature T0 °C to the attained temperature T1 °C which is in the range from 700 to 900°C, and lower than the soaking temperature T2 °C (that is, in the rapid heating temperature range) is set to 40 °C/sec or more. Further, the heating rate HR2 at which rate the temperature of the cold rolled sheet changes from the attained temperature T1 °C to the soaking temperature T2 °C is set to more than 15 °C/sec to 30 °C/sec. The attained temperature T1 °C may be arbitrarily set within the range in which the above conditions are satisfied, but by setting the attained temperature T1 °C to be equal to or lower than the Curie point (750 °C) of the steel sheet, heating in the temperature range of the inlet side temperature T0 °C to the attained temperature T1 °C (in rapid heating temperature range) can be performed by an induction heating device.

As described above, in the heating step according to the present embodiment, the frequencies of {111} oriented grains, {411} oriented grains, and Goss oriented grains in the primary recrystallized grain texture are appropriately controlled by controlling the heating rate. Specifically, in the primary recrystallized grain texture, it is preferable to reduce the {111} oriented grains and increase the {411} oriented grains and the Goss oriented grains. The ease of recrystallization differs depending on the crystal orientation, and the {411} oriented grains are most likely to recrystallize at a heating rate of around 100 °C/sec, and the Goss oriented grains are more likely to recrystallize in proportion to the heating rate. Therefore, in the present embodiment, the heating rate HR1 from the inlet side temperature T0 °C to the soaking heat T1 °C is set to 40 °C/sec or more. This makes it possible to reduce the {111} oriented grains and increase the {411} oriented grains and the Goss oriented grains. The heating rate HR1 is preferably 75 °C/sec or higher, and more preferably 75 to 125 °C/sec.

Further, in the present embodiment, the heating rate HR2 wherein the temperature of the cold rolled steel sheet changes from the attained temperature T1 °C to the soaking temperature T2 °C is set to more than 15 °C/sec to 30 °C/sec. The lower limit of the heating rate HR2 is preferably 16 °C/sec. As such, in the present embodiment, the heating rate HR2 after the temperature of the cold rolled sheet reaches the attained temperature T1 °C is set to a relatively high value of more than 15 °C/sec to 30 °C/sec. As a result, it is possible to obtain a primary recrystallized grain texture in which the frequencies of {411} oriented grains and Goss oriented grains are high, and the crystal grain size of the Goss oriented grains is increased. As a result, the secondary recrystallized grain size is reduced in the secondary recrystallization by the subsequent final annealing. Therefore, a grain-oriented electrical steel sheet having a good iron loss can be obtained.

Here, the reason why the above effect is obtained when the heating rate HR2 is controlled to more than 15 °C/sec to 30 °C/sec is not clear, but the present inventors consider the reason as follows. That is, in the temperature range from the attained temperature T1 °C to the soaking temperature T2 °C (the soaking temperature is 700 to 900 °C) for the rapid heating, recrystallization of nonrecrystallized grains and grain growth of crystal grains that have already been recrystallized will occur. At the soaking temperature of T2 °C, all the nonrecrystallized grains are recrystallized grains. After that, in the soaking step (soaking annealing) at the soaking temperature of T2 °C, the recrystallized grains enter the grain growth mode, the oriented grains having a small crystal grain size are slaughtered, and the oriented grains having a large crystal grain size increase their size. Here, the Goss oriented grains have already completed recrystallization at the attained temperature of T1 °C or lower. The grain growth of the Goss oriented grain that has already completed recrystallization will be promoted by controlling the heating rate HR2 from the attained temperature T1 °C to the soaking temperature T2 °C to more than 15 °C/sec to 30 °C/sec, and preferably 16 °C/sec or more and 30 °C/sec or less. That is, since the Goss oriented grains are already large-diameter crystal grains at the start of the soaking step, they can exist without being encroached by other oriented grains in the soaking step.

Here, if the heating rate HR2 is 15 °C/sec or less, the growth of the crystal grains in the orientation of recrystallization after the attained temperature T1 °C compete with the growth of the Goss oriented grains, and the Goss oriented grains cannot grow sufficiently. As a result, the frequency of Goss oriented grains decreases in the primary recrystallized grain texture, and an electrical steel sheet having a good iron loss characteristics cannot be obtained. On the other hand, if the heating rate HR2 is more than 30 °C/sec, the frequency and crystal grain size of the Goss oriented grains become extremely large in the primary recrystallized grain texture, and the sizing property (uniformity) of the entire texture is significantly impaired. Therefore, stable secondary recrystallized grains cannot be obtained, and as a result, the iron loss characteristics deteriorate. Further, the upper limit of HR2 may be no higher than 25 °C or lower than 25 °C. The range of HR2 can be achieved by heating using various heating devices as described in detail later. However, if HR2 becomes too large and overshoots the soaking temperature T2, it may lead to subsequent secondary recrystallization failure. Therefore, by setting the upper limit of HR2 to no higher than 25 °C or lower than 25 °C, it is possible to prevent overshooting the soaking temperature T2, which is preferable.

By the decarburization annealing step, an internal oxide layer containing a large amount of SiO₂ is formed in the surface layer of the cold rolled sheet.

### (2-6-1. Heating Method in Decarburization Annealing Step)

The heating of cold rolled sheet in the heating step may be performed by an induction heating device. In this case, the flexibility of the heating rate is high, the steel sheet can be heated in a non-contact manner, and the effect of being relatively easy to install in the decarburization annealing furnace can be obtained. In particular, if the attained temperature T1 °C is no higher than 750 °C, which is the Curie point of the steel sheet, the cold rolled sheet can be rapidly heated from the inlet side temperature T0 °C to the attained temperature T1 °C only by the induction heating device.

On the other hand, heating from the attained temperature T1 °C to the soaking temperature T2 °C and the soaking treatment in the subsequent soaking step may be performed using a heating device using a radiant heat source such as a radiant tube. It is difficult to heat with an induction heating device after the Curie point, but a heating device using a radiant heat source can stably heat a cold rolled sheet even in such a temperature range. Further, heating by radiant heat has an advantage that it is easy to control within the range of the heating rate HR2 (within the range slower than the heating rate HR1).

Of course, the heating method is not particularly limited. In addition to the above-mentioned method, the heating method may be a method using a new high-energy heat source such as a laser or plasma, a method using an energization heating device, or the like. It is also possible to combine these as appropriate. However, by using an induction heating device or a heating device using a radiant heat source, there is an advantage that the cold rolled sheet can be heated without the heating device coming into direct contact with the cold rolled sheet.

### (2-7. Nitriding Treatment Step)

After the decarburization annealing, the steel sheet is subject to nitriding treatment so that the nitrogen concentration of the steel sheet is 40 ppm or more and 1000 ppm or less. If the nitrogen concentration of the steel sheet after the nitriding treatment is less than 40 ppm, AlN is not sufficiently precipitated in the steel sheet, and AlN does not function as an inhibitor. Therefore, the nitrogen concentration of the steel sheet is set to 40 ppm or more. On the other hand, if the nitrogen concentration of the steel sheet exceeds 1000 ppm, excess AlN is present in the steel sheet even after the completion of secondary recrystallization in the final annealing. Such AlN causes deterioration of iron loss. Therefore, the nitrogen concentration of the steel sheet is set to 1000 ppm or less.

### (2-8. Annealing Separator Application Step)

After the nitriding treatment step, an annealing separator is applied to the surface of the steel sheet. Final annealing as described later may be performed in a state where the steel sheet is wound into a coil. If the final annealing is performed in such a state, the coil may be baked to be seized and it may be difficult to unwind the coil. Therefore, in the present embodiment, an annealing separator is applied so that the coil can be unwound after final annealing. Here, the main component of the annealing separator is MgO, and MgO in the annealing separator undergoes a solid-phase reaction with SiO₂ in the internal oxide layer during final annealing to form a glass film.

### (2-9. Final Annealing Steps)

The final annealing step is an annealing, which is also called a secondary recrystallization annealing step, and is a process for promoting secondary recrystallization of the iron structure. In the final annealing step, the cold rolled sheet (steel sheet) is heated to about 1200 °C as described later. Here, in the heating process, it is preferable that the heating rate HR3 is 15 °C/h or less in the temperature range of at least 1000 °C to 1100 °C. Further, instead of controlling the heating rate, it is also effective to keep the temperature within the temperature range of 1000 °C to 1100 °C for 10 hours or more. That is, the heating rate in this temperature range is extremely slowed down. As a result, preferential growth (secondary recrystallization) of Goss oriented grains can be promoted. If the heating rate HR3 is too fast (more than 15 °C/h), crystal grains having a crystal orientation other than the Goss orientation will grow. The heating rate in other temperature ranges is not particularly limited and may be about the same as that of the conventional final annealing. The final annealing atmosphere is not particularly limited, and may be the same as that of the conventional final annealing. For example, the final annealing atmosphere may be a mixed atmosphere of nitrogen and hydrogen.

In particular, in the present embodiment, the frequencies of {411} oriented grains and Goss oriented grains are high in the primary recrystallized grain texture before final annealing, and the crystal grain size of the Goss oriented grains is large (relatively in the primary recrystallized grain texture). For this reason, the secondary recrystallized grain texture is a texture in which the smaller size Goss oriented grains are highly aligned. That is, the frequency of Goss oriented grains is extremely high (relative to the secondary recrystallized grain texture obtained by the prior art), and the grain size of the Goss oriented grains is small. This is considered to be due to the following reasons.

That is, the frequencies of {411} oriented grains and Goss oriented grains in the primary recrystallized grain texture before the final annealing are high, and the crystal grain size of the Goss oriented grains is large (relatively in the primary recrystallized grain texture). As a result, the Goss oriented grains preferentially grow as compared to other oriented grains during the final annealing. Therefore, the frequency of Goss oriented grains is high (in other words, there are many growth nuclei), and the grain size of individual Goss oriented grains is preferentially increased, so that a large number of Goss oriented grains is be grown after secondary recrystallization. However, since the plurality of grown Goss oriented grains have a slight orientation difference, and thus they do not coalesce to each other. Therefore, the region occupied by the individual Goss oriented grains after the secondary recrystallization, that is, the grain size becomes smaller.

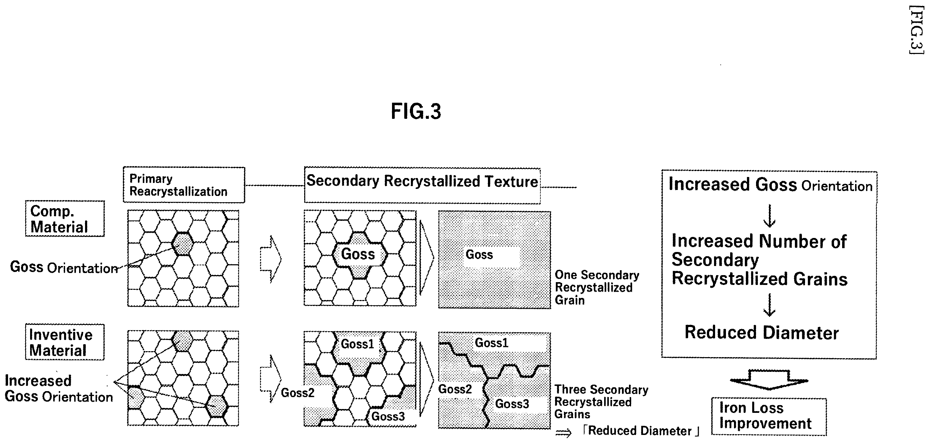

FIG. 3 is a diagram schematically showing how the textured structure in the present embodiment is formed, and also showing how the textured structure in the prior art is formed for reference.

As described above, in the present embodiment, the heating rate HR1 in the rapid heating temperature range in the heating (temperature rising) step of decarburization annealing and the heating rate HR2 from the attained temperature to the soaking temperature is controlled under appropriate conditions. As a result, the secondary recrystallized grain size can be reduced, and a grain-oriented electrical steel sheet having further improved iron loss characteristics can be stably produced. Further, it is possible to manufacture a grain-oriented electrical steel sheet whose magnetic properties and the like are further improved depending on the additional elements.

Here, the measuring method of HR1 and HR2 is not particularly limited, but it can be calculated by measuring the temperature of the steel sheet using, for example, a radiation thermometer or the like. However, if it is difficult to measure the steel sheet temperatures T0, T1 and T2 and it is difficult to estimate the exact points of the start and end points of HR1 and HR2, these points may be estimated by analogizing each heat pattern in the temperature rising step.

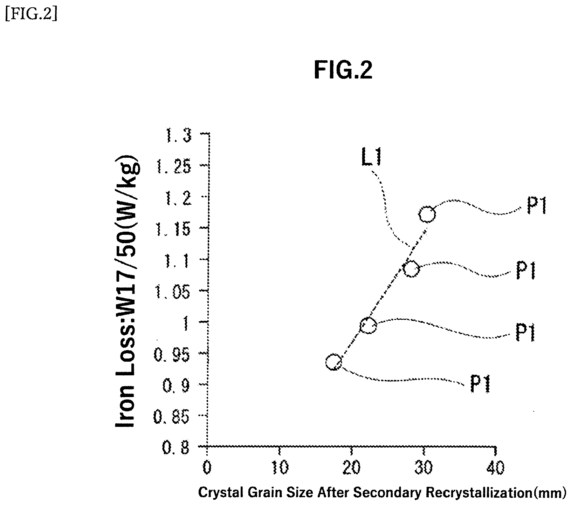

The present inventors prepared grain-oriented electrical steel sheets manufactured under various manufacturing conditions. Then, the grain size of these Goss oriented grains (grain size after secondary recrystallization) was measured. Specifically, the glass film was removed by pickling to expose the crystal grains, the number of crystal grains in the area of 180 cm² is measured, and the grain size (diameter equivalent to a circle) was calculated from the area per secondary recrystallized grain (=180/number) . Further, the iron loss W_{17/50} of these grain-oriented electrical steel sheets was measured. The result is shown in FIG. 2. The horizontal axis of FIG. 2 shows the grain size after secondary recrystallization, and the vertical axis shows the iron loss. Plot P1 shows the measurement results of each grain-oriented electrical steel sheet, and straight line L1 is an approximate straight line of plot P1. According to FIG. 2, there is a high correlation between the grain size after the secondary recrystallization and the iron loss, and it can be seen that the smaller the grain size after the secondary recrystallization, the smaller the iron loss. Further, as will be described in detail later, the grain-oriented electrical steel sheet produced by the method for manufacturing grain-oriented electrical steel sheet according to the present embodiment has an iron loss of approximately 0.85 (W/kg) or less. The following steps may be further performed after the final annealing step.

### (2-10. Purification Annealing Step)

In the purification annealing step following the final annealing step, the precipitates (AlN, MnS, etc.) used as an inhibitor are detoxified by purification after the completion of the secondary recrystallization. This makes it possible to reduce the hysteresis loss in the final magnetic characteristics. In the purification annealing step, for example, it is preferable to retain the steel sheet at 1200 °C for 10 hours or more in a hydrogen atmosphere. After purification annealing, the cold rolled sheet (steel sheet) is cooled.

### (2-11. Insulating Film Coating)

The surface of the steel sheet after the cooling step is coated with an insulating film coating and it is baked. The type of the insulating film is not particularly limited, and any conventionally known insulating film is suitable for the grain-oriented electrical steel sheet of the present embodiment. Examples of the insulating film include a film formed by applying an aqueous coating solution containing a phosphate salt and a colloidal silica. In this case, examples of the phosphate salt include phosphates such as Ca, Al, and Sr phosphates. Of these, the aluminum phosphate salt is more preferable. The colloidal silica is not particularly limited, and the particle size thereof can be appropriately determined. A particularly preferable particle size (average particle size) is 200 nm or less. Even if the particle size is less than 100 nm, there is no problem in dispersion, but the manufacturing cost becomes high and it may not be realistic. If the particle size exceeds 200 nm, it may be precipitated in the treatment liquid.

It is preferable to apply the insulating film coating liquid to the surface of the steel sheet by a wet coating method such as a roll coater and bake it in an air atmosphere at a temperature of 800 to 900 °C for 10 to 60 seconds to form a tension insulating film.

### (2-12. Magnetic Domain Control Step)

The specific processing method for the magnetic domain control step is not particularly limited, and lower iron loss can be obtained by performing magnetic domain control by, for example, laser irradiation, electron beam, etching, or a groove forming method using gears. As described above, the iron loss is greatly improved in the grain-oriented electrical steel sheet according to the present embodiment even before the magnetic domain control.

### EXAMPLES

Next, examples of the present invention will be described. The condition in the examples is one condition example adopted for confirming the feasibility and effect of the present invention, and the present invention is not limited to this one condition example. The present invention can adopt various conditions as long as the gist of the present invention is not deviated and the object of the present invention is achieved.

### <1. Example 1>

In Example 1, the steel slab having the component composition shown in Table 1 was heated to 1150 °C and then subjected to hot rolling to obtain a hot rolled sheet having a sheet thickness of 2.6 mm. Then, the hot rolled sheet was subject to hot-rolled sheet annealing with the first-stage temperature set to 1100 °C and the second-stage temperature set to 900 °C. Then, the hot rolled sheet was subjected to one cold rolling or a plurality of times of cold rolling with intermediate annealing therebetween to prepare a cold rolled sheet having a final sheet thickness of 0.23 mm.

### [Table 1]

**Table 1**

| | Steel No. | Chemical Component (mass%) | | | | | | |
|---|---|---|---|---|---|---|---|---|
| | | C | Si | Mn | Al | N | S | Others |
| Inventive Example | A1 | 0.0820 | 3.20 | 0.080 | 0.020 | 0.0040 | 0.0066 | |
| | A2 | 0.0650 | 3.30 | 0.150 | 0.021 | 0.0090 | 0.0035 | |
| | A3 | 0.0520 | 2.10 | 0.055 | 0.028 | 0.0070 | 0.0045 | Cr 0.1 |
| | A4 | 0.0580 | 2.90 | 0.180 | 0.011 | 0.0060 | 0.0065 | P 0.0125 |
| | A5 | 0.0760 | 2.05 | 0.250 | 0.060 | 0.0090 | 0.0070 | Ni 0.1 |
| | A6 | 0.0652 | 3.60 | 0.080 | 0.062 | 0.0100 | 0.0090 | Cu0.2 |
| | A7 | 0.0550 | 3.35 | 0.080 | 0.020 | 0.0045 | 0.0066 I | Mo0.05 |
| | A8 | 0.0490 | 3.45 | 0.120 | 0.028 | 0.0105 | 0.0100 | |
| | A9 | 0.0320 | 3.95 | 0.100 | 0.021 | 0.0090 | 0.0090 | Bi0.002 |
| | A10 | 0.0770 | 3.10 | 0.190 | 0.028 | 0.0110 | 0.0090 | |
| | A11 | 0.0780 | 2.95 | 0.180 | 0.051 | 0.0080 | 0.0076 | B0.0015 |
| | A12 | 0.0750 | 3.25 | 0.120 | 0.045 | 0.0090 | 0.0080 | Mo 0.05 |
| | A13 | 0.0610 | 3.10 | 0.050 | 0.021 | 0.0075 | 0.0086 | |
| | A14 | 0.0620 | 3.10 | 0.150 | 0.038 | 0.0098 | 0.0087 | Cr0.1 |
| | A15 | 0.0300 | 3.10 | 0.180 | 0.021 | 0.0078 | 0.0140 | B0.005 |
| | A16 | 0.0400 | 3.45 | 0.820 | 0.028 | 0.0100 | 0.0065 | |
| | A17 | 0.0550 | 3.45 | 0.100 | 0.029 | 0.0069 | 0.0069 | |
| Comp. Example | a1 | 0.13 | 3.45 | 0.15 | 0.032 | 0.0080 | 0.0065 | |
| | a2 | 0.07 | 4.50 | 0.15 | 0.025 | 0.0090 | 0.0070 | B0.0015 |
| | a3 | 0.07 | 1.80 | 0.15 | 0.025 | 0.0090 | 0.0070 | |
| | a4 | 0.05 | 3.35 | 1.50 | 0.030 | 0.0100 | 0.0080 | Cu0.2 |
| | a5 | 0.05 | 3.35 | 0.04 | 0.030 | 0.0100 | 0.0080 | |
| | a6 | 0.06 | 3.10 | 0.10 | 0.085 | 0.0085 | 0.0065 | Cr0.1 |
| | a7 | 0.06 | 3.10 | 0.10 | 0.009 | 0.0085 | 0.0065 | |
| | a8 | 0.07 | 3.00 | 0.15 | 0.03 | 0.0200 | 0.0070 | Mo0.01 |
| | a9 | 0.07 | 3.00 | 0.15 | 0.03 | 0.0020 | 0.0070 | |
| | a10 | 0.06 | 3.45 | 0.12 | 0.027 | 0.0095 | 0.0300 | |
| | a11 | 0.06 | 3.45 | 0.12 | 0.027 | 0.0095 | 0.0002 | |

Next, the cold rolled sheet with a final sheet thickness of 0.23 mm was subjected to decarburization annealing and nitriding treatment (annealing to increase the amount of nitrogen in the steel sheet). The heating rates HR1 and HR2, the attained temperature T1 °C and the soaking temperature T2 °C in the decarburization annealing were as shown in Table 2. The heating method was a radiant tube method. Here, the inlet side temperature T0 °C was set to 550 °C. Further, in the soaking step, the soaking temperature T2 was maintained for 100 seconds.

After that, an annealing separator containing magnesia (MgO) as a main component was applied to the surface of the steel sheet, and a final annealing was performed. Then, in the final annealing step, the steel sheet was heated to 1200 °C. Here, the heating rate in the temperature range of 1000 to 1100 °C was set to 10 °C/h. Then, an aqueous coating liquid composed of a phosphate salt and a colloidal silica was applied to the steel sheet, and the steel sheet was baked in air at 800 °C for 60 seconds. As a result, a tension insulating film was formed on the surface of the steel sheet (more specifically, on the surface of the glass film). Then, the iron loss W17/50 (energy loss measured under excitation conditions of 1.7 T and 50 Hz) of the grain-oriented electrical steel sheet to which the tension insulating film was applied was measured. The measurement was carried out according to JIS C 2550. The results are shown in Table 2.

### [Table 2]

**Table 2**

| | No. | Steel No. | T1 (°C) | HR1 (°C/sec) | T2 (°C) | HR2 (°C/sec) | Magnetic Property |
|---|---|---|---|---|---|---|---|
| | | | | | | | Iron Loss W17/50 (W/kg) |
| Inventive Example | B1 | A1 | 750 | 40 | 800 | 17 | 0.78 |
| | B2 | A2 | 730 | 40 | 810 | 18 | 0.81 |
| | B3 | A3 | 750 | 40 | 820 | 20 | 0.81 |
| | B4 | A4 | 750 | 40 | 810 | 25 | 0.81 |
| | B5 | A5 | 800 | 40 | 820 | 18 | 0.82 |
| | B6 | A6 | 780 | 40 | 790 | 18 | 0.80 |
| | B7 | A7 | 790 | 40 | 820 | 20 | 0.82 |
| | B8 | A8 | 800 | 40 | 830 | 16 | 0.80 |
| | B9 | A9 | 780 | 40 | 830 | 16 | 0.79 |
| | B10 | A10 | 750 | 40 | 810 | 16 | 0.80 |
| | B11 | A11 | 720 | 40 | 800 | 25 | 0.82 |
| | B12 | A12 | 700 | 40 | 800 | 25 | 0.83 |
| | B13 | A13 | 790 | 40 | 810 | 16 | 0.82 |
| | B14 | A14 | 790 | 40 | 820 | 20 | 0.79 |
| | B15 | A15 | 750 | 40 | 800 | 30 | 0.82 |
| | B16 | A16 | 750 | 40 | 810 | 16 | 0.81 |
| | B17 | A17 | 730 | 40 | 820 | 20 | 0.79 |
| | B18 | A17 | 720 | 100 | 820 | 20 | 0.78 |
| | B19 | A17 | 750 | 400 | 830 | 24 | 0.81 |
| | B20 | A17 | 740 | 1000 | 810 | 23 | 0.80 |
| | B21 | A17 | 730 | 1200 | 800 | 16 | 0.77 |
| Comp. Example | b1 | a1 | 750 | 40 | 820 | 20 | 0.95 |
| | b2 | a2 | 750 | 40 | 820 | 20 | 2.01 |
| | b3 | a3 | 750 | 40 | 820 | 20 | 1.21 |
| | b4 | a4 | 750 | 40 | 820 | 20 | 1.35 |
| | b5 | a5 | 720 | 40 | 800 | 18 | 1.02 |
| | b6 | a6 | 720 | 40 | 800 | 18 | 1.67 |
| | b7 | a7 | 720 | 40 | 800 | 18 | 1.66 |
| | b8 | a8 | 720 | 40 | 800 | 18 | 0.82 |
| | b9 | a9 | 710 | 40 | 810 | 18 | 1.78 |
| | b10 | a10 | 710 | 40 | 810 | 18 | 0.99 |
| | b11 | a11 | 710 | 40 | 810 | 18 | 1.98 |
| | b12 | A1 | 790 | 40 | 810 | 50 | 1.21 |
| | b13 | A1 | 790 | 20 | 820 | 20 | 0.95 |
| | b14 | A2 | 750 | 40 | 820 | 10 | 0.89 |
| | b15 | A2 | 750 | 40 | 950 | 20 | 1.33 |
| | b16 | A2 | 730 | 20 | 820 | 60 | 0.98 |
| | b17 | A3 | 730 | 20 | 820 | 5 | 0.91 |
| | b18 | A3 | 720 | 40 | 930 | 40 | 1.76 |
| | b19 | A17 | 720 | 40 | 830 | 15 | 0.89 |
| | b20 | A17 | 720 | 100 | 840 | 15 | 0.88 |
| | b21 | A17 | 750 | 300 | 850 | 15 | 0.90 |
| Reference Example | b22 | A17 | 730 | 100 | (840) | 26 | 1.35 |
| | b23 | A17 | 750 | 350 | (850) | 26 | 1.56 |
| | b24 | A17 | 720 | 1000 | (830) | 26 | 1.34 |

In Inventive Examples B1 to B17 that satisfy all the conditions (component composition, temperature control in the decarburization annealing step) of the method for manufacturing grain-oriented electrical steel sheets according to the present embodiment, the iron loss W17/50 of 0.85 W/kg or less is obtained, which is a good iron loss. In Inventive Examples B1 to B17, the heating rate HR1 from the inlet side temperature T0 °C (550 °C) to the attained temperature T1 °C was set to 40 °C/sec, and the heating rate HR2 from the attained temperature T1 °C to the soaking temperature T2 °C was set to more than 15 °C/sec to 30 °C/sec.

In B18 to B21, the iron loss W_{17/50} is 0.85 W/kg or less, which is a good iron loss. In Inventive Examples B18 to B21, the heating rate HR1 from the inlet side temperature T0 °C (550 °C) to the attained temperature T1 °C was set to 100, 400, 1000 and 1200 °C/sec, respectively, and the heating rate HR2 from the attained temperature T1 °C to the temperature T2 °C was set to more than 15 °C/sec to 30 °C/sec.

On the other hand, in Comparative Examples b2, b4, b6, b7, b9 and b11, since a steel slab in which the mass% of a portion of the component composition was out of the range of the present embodiment was used, secondary recrystallization did not occur and the iron loss W_{17/50} became 1.00 W/kg or more, which was significantly inferior. Further, Comparative Example b1 had poor decarburization, Comparative Examples b3 and b5 had low intrinsic resistance, and Comparative Example b10 had an iron loss of 0.9 W/kg or more, due to residual sulfide, which was inferior. In Comparative Example b8, although the iron loss was good, blisters frequently occurred on the product sheet, which was unsuitable as a commercial product. In Comparative Examples b12 to b18, although the mass% of the component composition is within the range of the present invention, the heating conditions for decarburization annealing are outside the range of the present invention. Therefore, the iron loss W_{17/50} remained at 0.89 W/kg or more. Specifically, in Comparative Example b12, since the heating rate HR2 was high, the frequency of Goss oriented grains became too high, and secondary recrystallization over the entire length of the coil could not be achieved after the final annealing. In Comparative Examples b13 and b14, the heating rate HR1 or the heating rate HR2 was slow, respectively, so that the number of Goss oriented grains was reduced in the primary recrystallized grain texture. Therefore, a good iron loss could not be achieved. In Comparative Examples b15 and b18, the soaking temperature T2 °C exceeded 900 °C, and so a temperature overshoot occurred. Therefore, the primary recrystallized grain size became too large, and the secondary recrystallization did not occur by final annealing. In Comparative Examples b16 and b17, since the heating rate HR1 was slow, Goss oriented grains did not develop in the primary recrystallized grain texture, and a good iron loss could not be achieved.

For b19 to b21, the heating rate HR1 from the inlet side temperature T0 °C (550 °C) to the attained temperature T1 °C was set to 40, 100 and 300 °C/sec, respectively, and the heating rate HR2 from the attained temperature T1 °C to the soaking temperature T2 °C was set to 15 °C/sec. The iron loss W_{17/50} was 0.85 W/kg or more, which was not a good iron loss. This is because the Goss oriented grains in the primary recrystallized grain texture did not develop.

For b22 to b24, the heating rate HR1 from the inlet side temperature T0 °C (550 °C) to the attained temperature T1 °C was set to 100, 350 and 1000 °C/sec, respectively, and the heating rate HR2 from the attained temperature T1 °C to the soaking temperature T2 °C was set to 26 °C/sec, and the predetermined soaking temperature T2 was set to 840, 850 and 830 °C, respectively. The iron loss W_{17/50} greatly exceeded 1.00 W/kg, and a secondary recrystallization failure occurred. This is because the heating rate was too high and thus T2 was too high beyond the predetermined temperature (overshoot).

### <2. Example 2>

In Example 2, the steel slab having the component composition shown in Table 1 was heated to 1150 °C and then subjected to hot rolling to obtain a hot rolled steel sheet having a sheet thickness of 2.6 mm. Then, the hot rolled sheet was subject to hot-rolled sheet annealing with the first-stage temperature set to 1100 °C and the second-stage temperature set to 900 °C. Then, the hot rolled sheet was subjected to one cold rolling or a plurality of cold rollings with intermediate annealing therebetween to prepare a cold rolled sheet having a final sheet thickness of 0.23 mm.

Next, the cold rolled sheet with a final sheet thickness of 0.23 mm was subjected to decarburization annealing and nitriding treatment (annealing to increase the amount of nitrogen in the steel sheet). The heating rates HR1 and HR2, the attained temperature T1 °C, and the soaking temperature T2 °C in decarburization annealing were as shown in Table 2. The heating method was a radiant tube method. Here, the inlet side temperature T0 °C was set to 550 °C. Further, in the soaking step, the soaking temperature T2 was maintained for 120 seconds.

After that, an annealing separator containing magnesia (MgO) as a main component was applied to the surface of the steel sheet, and the final annealing was performed. Then, in the final annealing step, the steel sheet was heated to 1200 °C. Here, the heating rate in the temperature range of 1000 to 1100 °C was set to 10 °C/h. Then, an aqueous coating liquid composed of a phosphate salt and a colloidal silica was applied to the steel sheet, and the steel sheet was baked in air at 800 °C for 60 seconds. As a result, a tension insulating film was formed on the surface of the steel sheet (more specifically, on the surface of the glass film) . Then, the iron loss W_{17/50} (energy loss measured under excitation conditions of 1.7 T and 50 Hz) of the grain-oriented electrical steel sheet to which the tension insulating film was applied was measured. The measurement was carried out according to JIS C 2550. The results are shown in Table 3.

**[Table 3]**

| | No. | Steel No. | T1 (°C) | HR1 (°C/sec) | T2 (°C) | HR2 (°C/sec) | Magnetic Property |
|---|---|---|---|---|---|---|---|
| | | | | | | | Iron Loss W17/50 (W/kg) |
| Inventive Example | C1 | A1 | 750 | 40 | 800 | 17 | 0.82 |
| | C2 | A2 | 730 | 40 | 810 | 18 | 0.81 |
| | C3 | A3 | 750 | 40 | 820 | 20 | 0.80 |
| | C4 | A4 | 750 | 40 | 810 | 25 | 0.81 |
| | C5 | A5 | 800 | 100 | 820 | 18 | 0.79 |
| | C6 | A6 | 780 | 100 | 810 | 18 | 0.78 |
| | C7 | A7 | 790 | 100 | 810 | 18 | 0.78 |
| | C8 | A8 | 800 | 100 | 810 | 18 | 0.79 |
| | C9 | A9 | 780 | 100 | 820 | 18 | 0.79 |

Since all of Inventive Examples C1 to C9 satisfy all the conditions (component composition, temperature control in the decarburization annealing step) of the method for manufacturing grain-oriented electrical steel sheets according to the present embodiment, the iron loss W_{17/50} of 0.85 W/kg or less, which is a good iron loss was obtained. In particular, in Inventive Examples C5 to C9, the heating rate HR1 from the inlet side temperature T0 °C (550 °C) to the attained temperature T1 °C was set to 100 °C/sec, and the heating rate HR2 from the attained temperature T1 °C to the soaking temperature T2 °C was set to more than 15 °C/sec to 30 °C/sec. That is, the heating rate HR1 was increased. As a result, in Inventive Examples C5 to C9, the iron loss W_{17/50} of 0.80 W/kg or less, which is a particularly good iron loss was obtained.

Although the preferred embodiments of the present invention have been described in detail with reference to the accompanying drawings, the present invention is not limited to such examples. It will be evident that a person with an ordinary skill in the art to which the present invention belongs can clearly come up with various changes or modifications within the scope of the technical ideas described in the claims. These are also naturally understood to belong to the technical scope of the present invention.

### REFERENCE SIGNS LIST

P1: Plot showing the measured values of grain size and iron loss after secondary recrystallization
L1: Approximate straight line of plot P1

## Claims

1. A method for manufacturing a grain-oriented electrical steel sheet, **characterized in that** the method comprises
a reheating step in which a steel slab comprising, as chemical components, by mass%, Si: 2.00 to 4.00%, C: 0.085% or less, Al: 0.01 to 0.065%, N: 0.004 to 0.012%, Mn: 0.05 to 1.00%, S: 0.003 to 0.015% and the balance Fe and impurities is heated at a temperature of 1280 °C or lower,
a hot rolling step of hot rolling the heated steel slab,
a hot rolled sheet annealing step of annealing the hot rolled sheet obtained by the hot rolling step,
a cold rolling step of cold rolling the hot rolled sheet after the hot rolled sheet annealing step,
a decarburization annealing step of decarburization annealing the cold rolled sheet obtained by the cold rolling step, and
a final annealing step of final annealing the cold rolled sheet after performing the decarburization annealing step,
wherein the decarburization annealing step comprises a heating step to heat the cold rolled sheet from an inlet side temperature T0 °C of 600 °C or lower to a soaking temperature T2 °C of a temperature higher than the inlet side temperature T0 °C, and a soaking step to maintain the temperature of the cold rolled sheet at the soaking temperature T2 °C,
wherein at the heating step in the decarburization annealing step, a heating rate HR1 at which rate the cold rolled sheet is heated from the inlet side temperature T0° C to an attained temperature T1 °C which is in the range from 700 to 900°C, and lower than the soaking temperature T2 °C is set to 40 °C/sec or more, and a heating rate HR2 at which rate the temperature of the cold rolled sheet changes from the attained temperature T1 °C to the soaking temperature T2 °C is set to higher than 15°C/sec and up to 30°C/sec.

2. The method for manufacturing a grain-oriented electrical steel sheet according to claim 1, **characterized in that** the heating rate HR1 is 75 to 125 °C/sec.

3. The method for manufacturing a grain-oriented electrical steel sheet according to claim 1 or 2, **characterized in that** the steel slab further contains, as a chemical component, by mass%, one or more of B: 0.0100% or less, Cr: 0.30% or less, Cu: 0.40% or less, P: 0.50% or less, Sn: 0.30% or less, Sb: 0.30% or less, Ni: 1.00% or less, Mo: 0.1% or less and Bi: 0.01% or less.
